(19) Europäisches Patentamt
European Patent Office
Office européen des brevets

(11) Publication number: 0 174 611 B1

(12) EUROPEAN PATENT SPECIFICATION

(45) Date of publication of patent specification: 23.01.91

(51) Int. Cl.$^5$: B 32 B 27/32, B 32 B 1/08

(21) Application number: 85111237.5

(22) Date of filing: 05.09.85

# (54) Laminated pipe and its use.

(30) Priority: 06.09.84 JP 187597/84

(43) Date of publication of application:
19.03.86 Bulletin 86/12

(45) Publication of the grant of the patent:
23.01.91 Bulletin 91/04

(84) Designated Contracting States:
DE GB SE

(56) References cited:
EP-A-0 030 091
EP-A-0 054 751
WO-A-84/01988
GB-A-1 286 460

(73) Proprietor: KURARAY CO., LTD.
1621 Sakazu
Kurashiki-City Okayama Prefecture 710 (JP)

(72) Inventor: Satoh, Kenji
3-11-30, Takabedai
Tondabayashi-City (JP)
Inventor: Negi, Taichi
Kuraray Oji Apartment house 1-103, 1660
Sakazu Kurashiki-City (JP)
Inventor: Ikari, Kyoichiro
2-2-9, Showa
Kurashiki-City (JP)
Inventor: Okaya, Takuji
2-46, Umegaoka
Nagaokakyo-City (JP)

(74) Representative: Vossius & Partner
Siebertstrasse 4 P.O. Box 86 07 67
D-8000 München 86 (DE)

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 174 611 B1

Courier Press, Leamington Spa, England.

## Description

The present invention relates to a pipe, and more particularly it relates to a hot water circulating pipe for the central heating system, especially the floor heating system. The pipe is superior in durability and permits very little permeation of oxygen, thereby keeping the amount of dissolved oxygen in hot water at an extremely low level and hence causing very little corrosion to metal units such as heat exchangers and pumps connected thereto.

Heretofore, the hot water pipe for floor heating has been mainly of iron or copper. It is usually embedded in the concrete floor or laid under the floor, and in most cases its repair after installation is very difficult. Therefore, the pipe is required to have durability over a period as long as 50 years. To meet this requirement, plastic pipes appeared on the market because of their many advantages. That is, they are obtained in the continuous form (with no joints), they are completely immune against the leakage from joints, they need no welding, and they do not corrode. Polyethylene pipes, polypropylene pipes, and polybutene pipes have been commonly used.

However, an unexpected fact has recently been found, i.e. that severe corrosion takes place in heat exchangers, pumps, and other metal parts connected to the plastic pipes installed for the floor heating system of the hot water circulating type. It is interesting to note that this corrosion did not occur in conventional systems that employed iron or copper pipes. After this finding, the persons concerned took interest in composite plastic pipes. Unfortunately, those which have been developed so far are not completely suitable for preventing corrosion.

A composite polyethylene pipe having an aluminum interlayer has been one of the recent developments. This pipe has been developed based on the assumption that oxygen in the atmosphere permeates through the pipe wall and dissolves in the hot water and the dissolved oxygen causes corrosion. This pipe, however, is not satisfactory because the aluminum layer often cracks. (The cause is not known yet; but the temperature change seems to be a possible cause).

Conventional pipes made of polyethylene, polypropylene, or other polyolefins do not exhibit satisfying heat resistance properties, and they usually have to undergo a radiation crosslinking treatment for the improvement of heat resistance. The radiation crosslinking is accomplished by irradiation (with electron rays) at a dose of as high as 12 to 20 Mrad so as to achieve a high degree of crosslinking and a high route of crosslinking for increased productivity. Such intense irradiation, which breaks the main chains and deteriorates the polymer, is not applicable to a multilayered pipe having an interlayer of saponified product of an ethylene-vinyl acetate copolymer (abbreviated as EVOH) which has good properties as an oxygen barrier.

A film, sheet, or tank made of a laminate of a siloxane-crosslinked polyolefin and EVOH is disclosed in Japanese Patent Laid-open Nos. 9611/1980 and 93542/1981. However, nothing is disclosed therein about a laminate composed of outer layers of siloxane-crosslinked polyolefin and an interlayer of EVOH and nothing is disclosed about the use of the laminate as a hot water circulating pipe. The two-layered laminate disclosed would not be suitable for such a use because it is poor in resistance to hot water and its oxygen barrier properties required to keep the amount of dissolved oxygen in hot water at a low level are also poor.

EP—A—0030091 discloses a gaseous diffusion resistant tube comprising a core of a liquid resistant plastics material, an outer layer of a plastics impact resistant material, and an intermediate layer of a gaseous diffusion resistant plastics material, wherein the core and the outer layer are made of a polyolefinic material, and the intermediate layer is made from polyvinylalcohol, polyacrylonitrile or polyvinylidene chloride. However, the oxygen barrier properties are not sufficient.

It is an object of the present invention to provide a hot water circulating pipe for the central heating system, particularly of the floor heating type. The pipe of this invention is of a three-layered structure that can be produced by coextrusion technique. The inner and outer layers are made of a resin that meets the above-mentioned requirements for heat resistance and durability, and the interlayer is made of EVOH. The inner and outer layers can be crosslinked to a prescribed degree after molding without adverse effect on the interlayer of EVOH. The pipe of this invention is produced in a continuous form with no joints. It has a good durability and causes no corrosion to metal units connected to it.

The object of this invention is achieved by a coextruded pipe having oxygen barrier properties made up of a layer (A) of siloxane-crosslinked polyolefin having a degree of crosslinking higher than 55% and lower than 90%, a layer (B) of EVOH containing 20 to 60 mol% of ethylene and having a degree of saponification higher than 95%, and a layer (C) of a maleic anhydride-modified polybutene, and its use according to the claims.

The pipe of this invention permits the amount of dissolved oxygen in hot water to increase very little when it is used for the circulation of hot water. Therefore, the corrosion of metal units such as heat exchangers and pumps connected to the pipe is minimized. In addition, the pipe of this invention is superior in resistance to heat and hot water, and the EVOH layer effectively protects the siloxane-crosslinked polyethylene layer (inside the EVOH) from oxidation degradation. This contributes to the long life time (durability) of the pipe.

The siloxane-crosslinked polyolefin constituting the layer (A) or optionally layer (C) of the pipe of this invention has a degree of crosslinking higher than 55%. It is produced by grafting a silyl group-containing compound having hydrolyzable organic groups onto the polyolefin chain or copolymerizing the compound

with an olefin, and then exposing the resulting grafted polymer or copolymer to water in the presence of a silanol condensation catalyst. Specifically speaking, the grafted polymer is preferably a polyolefin modified with a vinyl silane represented by the formula of

$$R{-}Si{-}(OR')_3$$

{where R is $H_2C{=}CH{-}$ or $H_2C{=}\underset{CH_3}{\underset{|}{C}}{-}\!{-}\overset{}{\underset{O}{\underset{\|}{C}}}{-}O(CH_2)_n{-}(n=1{-}5)$;

and R' is $CH_3{-}$, $C_2H_5{-}$, or $CH_3{-}O{-}CH_2{-}CH_2{-}CH_2{-}$}.

This modified polyolefin may be blended with an unmodified polyolefin resin so that the resulting blend has a degree of crosslinking higher than 55%. With a degree of crosslinking lower than 55%, a polyolefin with a carbon atom number of 2 to 3 does not exhibit adequate heat resistance (60 to 95°C) and durability properties. An excessively high degree of crosslinking decreases the flexibility of the polymer. Thus the degree of crosslinking should be higher than 55% and lower than 90%, preferably lower than 85%.

The degree of crosslinking as used in this invention is defined by the gel fraction in terms of wt%, which remains undissolved when the polymer is extracted with boiling xylene for 8 hours. The degree of crosslinking should preferably be higher than 65% from the standpoint of improved heat resistance and creep resistance of the polymer.

The silyl group-containing compound having hydrolyzable organic groups includes, for example, vinyltrimethoxysilane, vinyltriethoxysilane, vinyltriacetoxysilane, and vinyl-tris(β-methoxysilane).

A process for producing siloxane-crosslinkable polyolefin by copolymerization is disclosed in Japanese Patent Laid-open No. 9611/1980. According to this process, ethylene and a vinylsilane are copolymerized simultaneously or stepwise in a tank reactor or tubular reactor (the former being preferable) in the presence of a radical polymerization initiator (and a chain transfer agent, if necessary), under a pressure of 49 to 392 MPa (500 to 4000 kg/cm$^2$), preferably 98 to 392 MPa (1000 to 4000 kg/cm$^2$), at a reaction temperature of 100 to 400°C, preferably 150 to 250°C. The reaction system may contain a third monomer such as vinyl acetate, acrylic acid, methacrylic acid, and esters thereof in such an amount that does not impair the heat resistance, creep resistance, and durability.

A process for producing a siloxane-crosslinkable polyolefin by grafting is disclosed in Japanese Patent Publication No. 1711/1973. According to this process, a polyolefin, a free radical generator, and a vinylsilane are fed to an extruder and extrusion is performed at a cylinder temperature of 180 to 240°C, preferably 200 to 220°C. Preferred examples of the free radical generator include organic peroxides such as dicumyl peroxide and benzoyl peroxide.

The copolymerized or grafted polyolefin prepared as mentioned above should contain 0.001 to 15 wt%, preferably 0.01 to 5 wt%, and more preferably 0.1 to 2 wt% of the silane compound.

The crosslinking stage is facilitated by the use of a silanol condensation catalyst which is an organotin compound (such as dibutyltin dilaurate, dibutyltin diacetate, dioctyltin diacetate, and dioctyltin dilaurate), cuprous acetate, an acid (such as inorganic acid and fatty acid), and a base (such as ethylamine and dibutylamine). This silanol condensation catalyst should previously be incorporated into the siloxane-crosslinkable polyolefin in the form of a master batch with an unmodified polyolefin.

The polyolefin to be rendered siloxane-crosslinkable by grafting is a homopolymer of an α-olefin with 2 to 12 carbon atoms, a random or block copolymer of α-olefins, or a copolymer of an α-olefin and a comonomer such as vinyl acetate and acrylic acid or esters thereof in an amount that is not injurious to the requirements for the floor heating pipe. A high-density polyethylene having a high degree of polymerization is preferred. Another preferred example of the polyolefin is a modified polyolefin formed by grafting a small amount (say, 0.005 to 5 wt%, preferably 0.01 to 2 wt%) of maleic anhydride onto an olefin homopolymer or copolymer. This modified polyolefin, when rendered siloxane-crosslinkable as mentioned above, is preferred because of its good adhesion to EVOH which is achieved without loss of creep resistance and heat resistance. Preferred is maleic anhydride-modified high-density polyethylene which is rendered siloxane-crosslinkable. This modified siloxane-crosslinkable polyolefine may be blended with an unmodified, siloxane-crosslinkable polyolefine.

The EVOH used for the layer (B) contains 20 to 60 mol% of ethylene and has a degree of saponification higher than 95%. EVOH containing less than 20 mol% of ethylene shows good oxygen barrier properties but has a poor in moldability, while EVOH containing more than 60 mol% of ethylene exhibits a good moldability but shows poor oxygen barrier properties. Thus the ethylene content should preferably be 25 to 55 mol%. An EVOH having a degree of saponification lower than 95% shows poor oxygen barrier properties and is not suitable for this invention. More than two kinds of EVOH, each containing a different amounts of ethylene in the range of 20 to 60 mol%, can be used in the blend form.

The pipe of this invention is used for circulating hot water at 60 to 95°C, preferably 60 to 90°C, as mentioned above. This object is best achieved by a multi-layered pipe including two EVOH layers, the inner layer being made of EVOH containing 40 to 60 mol%, preferably 40 to 55 mol% of ethylene, and the outer

layer being made of EVOH containing 20 to 35 mol%, preferably 25 to 35 mol% of ethylene. The pipe of this structure is suitable for hot water of higher temperatures. The EVOH constituting each layer may be a blend of two or more than two kinds of EVOH each containing a different amounts of ethylene.

The EVOH used in this invention includes EVOH containing a comonomer such as propylene (and other olefins having more than 3 carbon atoms) and (meth)acrylic acid in such an amount that is not injurious to the oxygen barrier properties, and also silane-modified EVOH which is obtained by copolymerizing ethylene, vinyl acetate, and a vinyl silane (such as vinylmethoxysilane and vinylethoxysilane) and subsequently saponifying the resulting copolymer.

In the preferred embodiments of this invention, the layers (A) and (C) are made of siloxane-crosslinkable polyolefin and the layer (B) is made of EVOH. However, the layer (C) may be made of polybutene. Polybutene is superior in heat resistance and is also superior in coextrudability with EVOH. The layer of polybutene may be arranged either inside or outside; but the one arranged inside is preferred.

Polybutene is a homopolymer of butene-1 or a copolymer or graft copolymer composed of butene-1 as a principal component and a small amount of a vinyl monomer (such as ethylene and propylene) or a diolefin or carboxylic acid anhydride as a comonomer. Into the polybutene there may be incorporated a proper thermoplastic polymer (such as polyethylene, polypropylene, and ethylene-vinyl acetate copolymer) and a thermoplastic elastomer (such as ethylene-propylene rubber and polyisobutylene rubber) in an amount which is not injurious to the performance of the pipe. In addition, into the polybutene there may be incorporated further one or more of the following compounds: a slip agent, antistatic agent, ultraviolet light absorber, antioxidant, crosslinking agent, crosslinking auxiliary agent, metal chelating agent, inorganic powder, and coloring agent. A maleic anhydride-modified polybutene is preferred. As explained for the polybutene, both into the siloxane-crosslinkable polyolefin and the EVOH there may be incorporated thermoplastic resins and additives in proper amounts which are not injurious to the performance of the pipe.

The pipe of this invention has a wall thickness of 1 to 5 mm. It is useful for hot water at 60 to 95°C, preferably 60 to 90°C. The thickness of the EVOH layer is in the range of 15 to 150 µm, depending on the temperature of the hot water. It is preferably 70 to 120 µm when the temperature of the hot water is 60 to 95°C.

The oxygen barrier properties of EVOH depend on the water content in the EVOH, and they become poor as the water content increases. This holds particularly true for high temperatures. According to this invention, the EVOH layer is an interlayer but its position is not specifically limited. In preferred embodiments, however, the EVOH layer should be positioned near the external surface rather than at the center within the thickness of the pipe wall. This arrangement lowers the steady-state water content in the EVOH layer. In other words, the EVOH should be positioned in such a way that the inequality $a_1/a_2<1$ is satisfied, where $a_1$ is the thickness of the layer (A) or (C) outside the EVOH layer and $a_2$ is the thickness of the layer (A) or (C) inside the EVOH layer. The ratio of $a_1$ to $a_2$ should preferably be smaller than 0.9, more preferably smaller than 0.8.

Because of its oxygen barrier properties, the EVOH layer protects the inside layer from degradation by oxygen. The effect is remarkable when the temperature of the hot water is high, in which cases degradation is accelerated.

If the EVOH layer is too close to the outer surface of the pipe, any damage of the surface that might occur during installation would reach the EVOH layer. Therefore, the lower limit of $a_1/a_2$ should be 0.01. The thickness $a_1$ of the outside layer (A) or (C) should be 0.02 to 1.4 mm, preferably 0.03 to 1.3 mm; and the thickness $a_2$ of the inside layer (A) or (C) should be 1.0 to 3.0 mm, preferably 1.2 to 2.9 mm. Into the layers (A), (B), or (C) there may be incorporated an antioxidant (e.g., 3,5-t-butyl-4-hydroxytoluene, Irganox® 1010, and Irganox® 1076). However, the resin layer inside the EVOH needs none or only a small amount of an antioxidant. Where the inside and outside layers are made of the same kind of resin, they should preferably contain the same amount of the antioxidant in order to achieve a convenient coextrusion. (Otherwise, two extruders would be necessary for the individual layers).

Where the pipe composed of three layers (A), (B), and (C) is produced by coextrusion, it is desirable that an adhesive resin layer should be placed between layer (A) and layer (B), or between layer (B) and layer (C). This is not applicable to the case where layer (A) or (C) is made of maleic anhydride-modified polyolefin so that the adhesion between layer (A) or (C) and layer (B) is improved.

The adhesive resin is a polyolefin modified with an unsaturated carboxylic acid or a derivative thereof. Examples of the unsaturated carboxylic acid or derivatives thereof include monobasic acids and esters thereof (such as acrylic acid, methacrylic acid, and methyl methacrylate) and dibasic acids or anhydrides thereof (such as maleic acid, fumaric cid, itaconic acid, citraconic acid, and himic acid). They may be used individually or in combination with one another. Maleic anhydride is preferred.

The polyolefin used for the adhesive resin includes polymers of α-olefins having a carbon number of 2 to 12 (e.g., polyethylene, polypropylene, and polybutene), linear low-density polyethylene (which is a copolymer of ethylene and α-olefin with a carbon number of 2 to 12), copolymers of α-olefin with 2 to 12 carbon atoms, and a copolymerizable vinyl monomer (e.g., vinyl acetate and ethyl acrylate), and siloxane-crosslinked polyolefins (having a degree of crosslinking higher than 55%).

The above-mentioned polyolefins should be modified with an unsaturated carboxylic acid or an anhydride thereof so that the amount of chemically bonded modifier in the modified polyolefin is 0.005 to 5

wt%, preferably 0.01 to 2 wt%. A blend of the modified polyolefin and an unmodified polyolefin may be used as the adhesive resin. In this case, the amount of maleic anhydride in the modified polyolefin should be selected such that the content of chemically bonded maleic anhydride in the blend is 0.005 to 5 wt%, preferably 0.01 to 2 wt%. The thickness of the adhesive resin layer should be 2 to 100 μm, and preferably 4 to 60 μm.

Any of the resin layers constituting the pipe may be incorporated with an antioxidant such as 3,5-t-butyl-4-hydroxytoluene (BHT), Irganox® 1010, and Irganox® 1076. The incorporation of an antioxidant into the outside layer is necessary to extend the life of the pipe.

The multi-layered pipe of this invention can be efficiently produced in the continuous form by coextrusion from a circular die connected to two or three extruders. At the stage of coextrusion, the silane-modified polyolefin is not yet crosslinked and it can be easily formed into a pipe. After extrusion, the layer of the silane-modified polyolefin is exposed to water to effect crosslinking.

The crosslinking may be accomplished by permitting the green pipe to stand in the atmosphere for a long time so that the silane grafted onto polyolefin reacts with water vapor in the atmosphere; by immersing the green pipe in hot water or cold water; or by exposing the green pipe to steam. These are all known methods. The siloxane-crosslinked polyolefin thus obtained should have a degree of crosslinking higher than 55%, preferably higher than 60%.

The pipe of this invention is most suitable to be used as a hot water circulating pipe for floor heatings. It may also be used as a pipe for handling various kinds of liquids and gases. Another use is as a parison for the blow molding of bottles.

The invention is now described with reference to the following examples, which should not be construed to limit the scope of the invention.

Example 1

100 parts by weight of high-density polyethylene having a density of 0.952 g/ml and a melt index of 0.5 g/10 min ("Yukalon® Hard BX-50", a product of Mitsubishi Petrochemical Co., Ltd.) was mixed with 2 parts by weight of vinyltrimethoxysilane dissolved in acetone and 0.2 parts of dicumyl peroxide. The resulting mixture was extruded by a 65 mm extruder (L/D: 24) at 230°C into strands, which were subsequently cut into pellets. Thus there was obtained modified polyethylene onto which is grafted 1.5 wt% of vinylsilane. The gel fraction of this modified polyethylene is 0%.

Coextrusion for pipe molding was accomplished by the use of three extruders. To the first extruder was fed a blend composed of 100 parts by weight of the above-mentioned modified polyethylene pellets and 5 parts by weight of a master batch composed of 100 parts by weight of BX-50 and 2 parts by weight of dibutyltin dilaurate. To the second extruder was fed EVOH containing 31 mol% of ethylene and having a degree of saponification of 99.3% and a melt index of 1.2 g/10 min (at 190°C under a load of 2160 g). To the third extruder was fed a modified polyethylene ("Admer® NF-500", a product of Mitsui Petrochemical Industries, Ltd). modified with 0.02 wt% of maleic anhydride, having a melt index of 1.3 g/10 min (at 190°C under a load of 2160 g). Coextrusion was performed through a five-layer circular die for three extrudates. The die temperature was 230°C. The extruded pipe was cooled with water under reduced pressure. The extrusion rate was 1 m/min. Thus there was obtained a five-layered pipe, 20 mm in outside diameter, which is composed of (A)/(Ad)/(B)/(Ad)/(C), wherein (A) is the silane-modified polyethylene layer, (Ad) is the maleic anhydride-modified polyethylene layer, (B) is the EVOH layer, and (C) is the silane-modified polyethylene layer.

Steam at 120°C was introduced into the pipe and at the same time the outside of the pipe was exposed to steam at 120°C in order to effect crosslinking. The degree of crosslinking in the layer (A) was 76%. The outside layer (A) was 50 μm thick, the inside layer (C) was 1950 μm thick, the layer (B) was 98 μm, and each of the layers (Ad) was 50 μm. Incidentally, the resin for layers (A) and (C) was incorporated with 0.5 wt% of Irganox® 1010.

The pipe thus produced was examined for the ability to prevent the increase of dissolved oxygen, by circulating water at 70°C through the pipe which had been depleted of dissolved oxygen by the use of a column filled with metallic tin. The rate of increase of dissolved oxygen in water was measured in the atmosphere of a relative humidity (RH) of 65% (20°C). The measured value was 3.5 μg/liter/hour.

For comparison, a 2000-μm thick pipe made up of the layer (A) alone was prepared and crosslinking was achieved with steam as mentioned above. The degree of crosslinking was 75%. The rate of increase of dissolved oxygen in water measured for this pipe was 280 μg/liter/hour.

The rate of increase of dissolved oxygen in water expressed by μg/liter/hour is applied to the water in the pipe only, and it is calculated from the equation $A=B\times(V/v)$, where A is the rate of increase of dissolved oxygen in water in the pipe, B is the rate of increase of dissolved oxygen in water in the entire system including the pipe, V is the volume (ml) of water in the entire system including the pipe, and v is the volume (ml) of water in the pipe.

Example 2

A multi-layered pipe was produced in the same manner as in Example 1 except that high-density polyethylene was replaced by the one having a melt index of 0.1 g/10 min and a density of 0.955 ("Yukalon® Hard BX-70", a product of Mitsubishi Petrochemical Co., Ltd). and EVOH was replaced by the one

containing 40 mol% of ethylene and having a degree of saponification of 99.2% and a melt index of 3.5 g/10 min. The inside and outside layers of the pipe had a degree of crosslinking of 74%. The rate of increase of dissolved oxygen was 5.7 μm/liter/hour.

For comparison, a 2000 μm thick pipe made up of crosslinked polyethylene alone was prepared. The rate of increase of dissolved oxygen was 290 μg/liter/hour.

Example 3

A multi-layered pipe was produced in the same manner as in Example 1 except that EVOH was replaced by a 50:50 blend of an EVOH (X) containing 29 mol% of ethylene and having a degree of saponification of 99.4% and a melt index of 0.8 g/10 min and an EVOH (Y) containing 45 mol% of ethylene and having a degree of saponification of 99.2% and a melt index of 4.1 g/10 min. The rate of increase of dissolved oxygen was 6.0 μg/liter/hour.

Example 4

A multi-layered pipe was produced in the same manner as in Example 3 except that the EVOH was formed in double layers by using two extruders, EVOH (X) being outside and EVOH (Y) being inside. The inside and outside layers of crosslinked polyethylene were formed so that the thickness ratio $a_1/a_2$ was 0.05. The rate of increase of dissolved oxygen was 5.9 μg/liter/hour.

Example 5

A three-layered pipe was produced by coextrusion in the same manner as in Example 1. The adhesive resin (modified polyethylene "Admer® NF-500") was not used, and the inside and outside layers were made of high-density polyethylene ("Yukalon® Hard BX-50") onto which is grafted 0.015 wt% of maleic anhydride. The adhesion of the EVOH layer to the inside and outside layers was satisfactory. The degree of crosslinking of the modified high-density polyethylene was 78%. The rate of increase of dissolved oxygen was 3.8 μg/liter/hour.

For comparison, a pipe having no EVOH layer was made of said modified high-density polyethylene alone, followed by crosslinking. The rate of increase of dissolved oxygen was 260 μg/liter/hour.

Example 6

Example 1 was repeated except that the matrix of the master batch containing dibutyltin dilaurate was replaced by modified high-density polyethylene onto which 0.3 wt% of maleic anhydride is grafted and the amount of the master batch was changed to 10 parts by weight. The adhesion of the EVOH layer to the inside and outside layers was satisfactory for practical use. The rate of increase of dissolved oxygen was 3.0 μg/liter/hour.

Example 7

An ethylene-vinyltrimethoxysilane copolymer was produced by feeding ethylene, vinyltrimethoxysilane, propylene (as a chain transfer agent), and t-butyl-peroxyisobutyrate (as a polymerization initiator) at a rate of 43 kg/h, 95 g/h, 450 g/h, and 2 g/h, respectively, to a 1.5-liter stirred autoclave. The polymerization pressure was 235 MPa (2400 kg/cm$^2$) and the polymerization temperature was 220°C. The conversion of ethylene was 15%. The resulting copolymer was found to have a melt index of 1.0 g/10 min (measured according to JIS K6760) and to contain 0.7 wt% of vinylsilane.

This copolymer was blended with 5 wt% of a master batch containing 1 wt% of dibutyltin dilaurate. The resulting blend was used as the crosslinkable polyethylene for producing a pipe in the same manner as in Example 1. After crosslinking, the polyethylene of the inside and outside layers had a degree of crosslinking of 72%. The rate of increase of dissolved oxygen was 3.9 μg/liter/hour.

Example 8

Copolymerization was performed in the same manner as in Example 7 except that the feed rate of vinyltrimethoxysilane changed to 190 g/h. The conversion of ethylene was 15%. The resulting copolymer was found to have a melt index of 1.0 g/10 min and to contain 1.8 wt% of vinylsilane.

A pipe composed of inside and outside layers of crosslinkable polyethylene and an interlayer of EVOH was produced in the same manner as in Example 1. The degree of crosslinking of the inside and outside layers was 80%. The rate of increase of dissolved oxygen was 3.7 μg/liter/hour.

Comparative Example 1

A three-layered pipe, 20 mm in outside diameter, was produced by coextrusion from a three-layer circular die for three extrudates. The outside layer (A) was made of vinylsilane-modified polyethylene containing dibutyltin dilaurate. The interlayer (Ad) was made of maleic anhydride-modified polyethylene. The inside layer (B) was made of EVOH. These raw materials are the same as those used in Example 1. The thus produced pipe was exposed to steam at 120°C to effect crosslinking. The degree of crosslinking in the layer (A) was 66%. The thicknesses of the layers (A), (Ad), and (B) was 2000 μm, 50 μm, and 105 μm, respectively. Each of the resins used was incorporated with 0.5 wt% of Irganox® 1010.

After circulation of hot water (85°C) for several days, the surface of the EVOH layer lost luster and

became irregular and the EVOH layer partly peeled off. The rate of increase of dissolved oxygen was 250 µg/liter/hour.

Example 19

The composite pipe produced in Example 1 was embedded in the floor for floor heating of six rooms. The length of the pipe per room was 80 meters. The heating system was run for six months, with an iron test piece (10 cm square and 0.1 mm thick) placed in the hot water circulating tank. At the end of the period, the test piece was examined. The surface of the test piece was smooth although covered with brown rust. The rust was easily removed by a wire brush and the metal surface appeared again. The weight loss of the test piece was 0.2%.

For comparison, a pipe composed of layer (A) alone (2000 µm thick) was installed and tested in the same manner as mentioned above. The test piece at the end of the period had an irregular surface with 1 to 1.5 mm thick rust. The rust, which partly penetrated the test piece, was not easily removed by a wire brush. The weight loss measured after the removal of rust was 35%.

Example 10

A five-layered pipe of the following construction, 20 mm in outside diameter, was produced by coextrusion from a five-layer circular die for four extrudates. Outside layer (A) of vinylsilane-modified high-density polyethylene containing dibutyltin dilaurate/layer (Ad) of maleic anhydride-modified polyethylene/layer (B) of EVOH/layer (Ad) of maleic anhydride-modified polyethylene/inside layer (C) of polybutene-1 ("WITRON®" made by Adeka-Argus Co., Ltd). The raw materials other than polybutene-1 are the same as those used in Example 1. The thus produced pipe was exposed to steam at 120°C to effect crosslinking. The degree of crosslinking in the layer (A) was 75%. The thicknesses of the layers (A), (Ad), (B), (Ad), and (C) was 50 µm, 50 µm, 98 µm, 50 µm, and 1950 µm, respectively. The rate of increase of dissolved oxygen was 3.8 µg/liter/hour.

Example 11

A three-layered pipe of the following construction, 20 mm in outside diameter, was produced by coextrusion. Outside layer (A) of vinylsilane-modified, maleic anhydride-grafted (0.015 wt%) high-density polyethylene containing dibutyltin dilaurate/layer (B) of EVOH/inside layer (C) of maleic anhydride-grafted (0.018 wt%) polybutene-1. The adhesion of the outside and inside layers to the EVOH layer was satisfactory for practical use. The degree of crosslinking in the layer (A) was 76%. The thicknesses of the layers (A), (B), and (C) was 50 µm, 98 µm, and 1950 µm, respectively. The rate of increase of dissolved oxygen was 3.9 µg/liter/hour.

## Claims

1. Use of a coextruded pipe having oxygen barrier properties and comprising a layer (A) of siloxane-crosslinked polyolefin, an interlayer (B) of a saponified product of an ethylene-vinyl acetate copolymer and a layer (C) of a polyolefin, characterized in that the siloxane-crosslinked polyolefin of layer (A) has a degree of crosslinking higher than 55% and lower than 90%, the saponified product of an ethylene-vinylacetate copolymer of layer (B) contains 20 to 60 mol-% of ethylene and has a degree of saponification of higher than 95%, and the polyolefin of layer (C) is at least one member selected from the group consisting of said siloxane-crosslinked polyolefin of layer (A) and polybutene, as hot water circulating pipe.

2. The use according to claim 1 wherein $a_1/a_2<1$ is satisfied, where $a_1$ is the thickness of the layer (A) or (C) outside the layer (B) and $a_2$ is the thickness of the layer (A) or (C) inside the layer (B).

3. The use according to claim 1 for floor heating systems.

4. The use according to any of claims 1 to 3, wherein the layer (A) is the outside layer and the layer (C) is the inside layer.

5. The use according to any of claims 1 to 3, wherein the layer (C) is the outside layer and the layer (A) is the inside layer.

6. The use according to any of claims 1 to 3, wherein the ratio of the thickness of the outside layer to the thickness of the inside layer is smaller than 1 and not smaller than 0.01.

7. The use according to any of claims 1 to 3, wherein the siloxane-crosslinked polyolefin has a degree of crosslinking higher than 65%.

8. The use according to any of claims 1 to 3, wherein the siloxane-crosslinked polyolefin is siloxane-crosslinked polyethylene.

9. The use according to any of claims 1 to 3, wherein the siloxane-crosslinked polyolefin is siloxane-crosslinked, maleic anhydride-modified polyolefin.

10. The use according to any of claims 1 to 3, wherein the polybutene is a maleic anhydride-modified polybutene.

11. A coextruded pipe having oxygen barrier properties and comprising a layer (A) of siloxane-crosslinked polyolefin, an interlayer (B) of a saponified product of an ethylene-vinyl acetate copolymer and a layer (C) of a polyolefin, characterized in that the siloxane-crosslinked polyolefin of layer (A) has a degree of crosslinking higher than 55% and lower than 90%, the saponified product of an ethylene-vinylacetate

copolymer of layer (B) contains 20 to 60 mol-% of ethylene and has a degree of saponification higher than 95%, and the polyolefin of layer (C) is a maleic anhydride-modified polybutene.

**Patentansprüche**

1. Verwendung eines durch Koextrusion hergestellten Rohres mit Sperreigenschaften für Sauerstoff, umfassend eine Schicht (A) aus einem mit Siloxan vernetzten Polyolefin, einer Zwischenschicht (B) aus einem verseiften Produkt eines Ethylen-Vinylacetat-Copolymers und einer Schicht (C) aus einem Polyolefin, dadurch gekennzeichnet, daß das mit Siloxan vernetzte Polyolefin der Schicht (A) einen Vernetzungsgrad von mehr als 55% und weniger als 90% aufweist, das verseifte Produkt des Ethylen-Vinylacetat-Copolymers der Schicht (B) 20 bis 60 Mol-% Ethylen enthält und einen Verseifungsgrad von mehr als 95% besitzt, und das Polyolefin der Schicht (C) wenigstens ein Mitglied ist, ausgewählt aus der Gruppe des mit Siloxan vernetzten Polyolefins der Schicht (A) und Polybuten, als Heißwasser-Umlaufrohr.

2. Verwendung nach Anspruch 1, wobei die Beziehung $a_1/a_2<1$ erfüllt ist, in der $a_1$ die Dicke der Schicht (A) oder (C) außerhalb der Schicht (B) und $a_2$ die Dicke der Schicht (A) oder (C) innerhalb der Schicht (B) bedeutet.

3. Verwendung nach Anspruch 1 für Bodenheizungsysteme.

4. Verwendung nach einem der Ansprüche 1 bis 3, wobei die Schicht (A) die äußere Schicht und die Schicht (C) die innere Schicht ist.

5. Verwendung nach einem der Ansprüche 1 bis 3, wobei die Schicht (C) die äußere Schicht und die Schicht (A) die innere Schicht ist.

6. Verwendung nach einem der Ansprüche 1 bis 3, wobei das Verhältnis der Dicke der äußeren Schicht zu der Dicke der inneren Schicht kleiner als 1 und nicht kleiner als 0,01 ist.

7. Verwendung nach einem der Ansprüche 1 bis 3, wobei das mit Siloxan vernetzte Polyolefin einen Vernetzungsgrad von mehr als 65% aufweist.

8. Verwendung nach einem der Ansprüche 1 bis 3, wobei das mit Siloxan vernetzte Polyolefin ein mit Siloxan vernetztes Polyethylen ist.

9. Verwendung nach einem der Ansprüche 1 bis 3, wobei das mit Siloxan vernetzte Polyolefin ein mit Siloxan vernetztes Maleinsäureanhydrid-modifiziertes Polyolefin ist.

10. Verwendung nach einem der Ansprüche 1 bis 3, wobei das Polybuten ein Maleinsäureanhydrid-modifiziertes Polybuten ist.

11. Ein durch Koextrusion hergestelltes Rohr mit Sperreigenschaften für Sauerstoff, umfassend eine Schicht (A) aus einem mit Siloxan vernetzten Polyolefin, einer Zwischenschicht (B) aus einem verseiften Produkt eines Ethylen-Vinylacetat-Copolymers und einer Schicht (C) aus einem Polyolefin, dadurch gekennzeichnet, daß das mit Siloxan vernetzte Polyolefin der Schicht (A) einen Vernetzungsgrad von mehr als 55% und weniger als 90% aufweist, das verseifte Produkt des Ethylen-Vinylacetat-Copolymers der Schicht (B) 20 bis 60 Mol-% Ethylen enthält und einen Verseifungsgrad von mehr als 95% besitzt, und das Polyolefin der Schicht (C) ein Maleinsäureanhydrid-modifiziertes Polybuten ist.

**Revendications**

1. Utilisation d'un tube coextrudé ayant des propriétés d'arrêt de l'oxygène et comprenant une couche (A) d'une polyoléfine réticulée avec un siloxane, une couche intermédiaire (B) d'un produit saponifié d'un copolymère d'éthylène-acétate de vinyle, et une couche (C) d'une polyoléfine, caractérisé en ce que la polyoléfine réticulée avec un siloxane de la couche (A) a un degré de réticulation supérieur à 55% et inférieur à 90%, le produit saponifié d'un copolymère d'éthylène-acétate de vinyle de la couche (B) contient 20 à 60% molaires d'éthylène et a un degré de saponification supérieur à 95% et la polyoléfine de la couche (C) est au moins un composant choisi dans le groupe constitué par ladite polyoléfine réticulée avec un siloxane de la couche (A) et un polybutène, comme tube de circulation d'eau chaude.

2. L'utilisation selon la revendication 1, dans laquelle la relation $a_1/a_2<1$ est satisfaite, $a_1$ étant l'épaisseur de la couche (A) ou (C) à l'extérieur de la couche (B) et $a_2$ étant l'épaisseur de la couche (A) ou (C) à l'intérieur de la couche (B).

3. L'utilisation selon la revendication 1 pour des systèmes de chauffage par la plancher.

4. L'utilisation selon l'une quelconque des revendications 1 à 3, dans laquelle la couche (A) est la couche extérieure et la couche (C) est la couche intérieure.

5. L'utilisation selon l'une quelconque des revendications 1 à 3, dans laquelle la couche (C) est la couche extérieure et la couche (A) est la couche intérieure.

6. L'utilisation selon l'une quelconque des revendications 1 à 3, dans laquelle le rapport de l'épaisseur de la couche extérieure à l'épaisseur de la couche intérieure est inférieur à 1 et n'est pas inférieur à 0,01.

7. L'utilisation selon l'une quelconque des revendications 1 à 3, dans laquelle la polyoléfine réticulée avec un siloxane a un degré de réticulation supérieur à 65%.

8. L'utilisation selon l'une quelconque des revendications 1 à 3, dans laquelle la polyoléfine réticulée avec un siloxane est un polyéthylène réticulé avec un siloxane.

9. L'utilisation selon l'une quelconque des revendications 1 à 3, dans laquelle la polyoléfine réticulée avec un siloxane est une polyoléfine modifiée avec de l'anhydride maléique, réticulée avec un siloxane.

10. L'utilisation selon l'une quelconque des revendications 1 à 3, dans laquelle le polybutène est un polybutène modifié avec de l'anhydride maléique.

11. Un tube coextrudé ayant des propriétés d'arrêt de l'oxygène et comprenant une couche (A) d'une polyoléfine réticulée avec un siloxane, une couche intermédiaire (B) d'un produit saponifié d'un copolymère d'éthylène-acétate de vinyle, et une couche (C) d'une polyoléfine, caractérisé en ce que la polyolefine réticulée avec un siloxane de la couche (A) a un degré de réticulation supérieur à 55% et inférieur à 90%, le produit saponifié d'un copolymère d'éthylène-acétate de vinyle de la couche (B) contient 20 à 60% molaires d'éthylène et a un degré de saponification supérieur à 95% et la polyoléfine de la couche (C) est un polybutène modifié avec de l'anhydride maléique.